Europäisches Patentamt

European Patent Office

Office européen des brevets

(19)

(11) Publication number: 0 339 762
A2

## (12) EUROPEAN PATENT APPLICATION

(21) Application number: 89301462.1

(22) Date of filing: 15.02.89

(51) Int. Cl.⁴: C09K 7/02

(30) Priority: 25.04.88 US 157887

(43) Date of publication of application:
02.11.89 Bulletin 89/44

(84) Designated Contracting States:
DE ES FR GB IT NL

(71) Applicant: BAROID TECHNOLOGY, INC.
3000 North Belt East
Houston Texas 77032(US)

(72) Inventor: Pless, Marvin Lee
21034 Park Brush
Houston Texas 77450(US)
Inventor: Kercheville, Jim David
16205 Lakeview
Houston Texas 77450(US)
Inventor: Augsburger, John Jerald
128 Pamellia
Bellaire Texas 77401(US)

(74) Representative: Brock, Peter William et al
URQUHART-DYKES & LORD 91 Wimpole
Street
London W1M 8AH(GB)

(54) Defoamer composition for use in water based drilling fluids.

(57) An effective defoamer composition for water based drilling muds comprises a generally uniform, particulate mixture of from 1 to 50% by weight of an aliphatic alcohol having from 8 to 32 carbon atoms, and from 99 to 50% by weight of a solid carrier material which is generally non-swelling in aqueous media, which can be formed into particles having an average size of less than 150 micrometers, and which at least partially adsorbs said alcohol.

EP 0 339 762 A2

# DEFOAMER COMPOSITION FOR USE IN WATER BASED DRILLING FLUIDS

The present invention relates to defoamer compositions. More particularly, the present invention relates to particulate defoamers which can be used in aqueous drilling muds or fluids.

Foaming in drilling muds, particularly water based drilling muds, is a common problem. Foaming can lead to lowered mud weight because of the presence of entrapped air. Furthermore, foaming causes flow problems by interfering with the efficiency of pumps, mud degasers and other mud handling and treating equipment. Foaming can also alter the rheological properties of the mud thereby affecting its ability to control fluid loss, suspend drill cuttings, etc.

Fatty alcohols have long been employed, with limited success, as defoamers for aqueous based drilling fluids. However, the use of fatty alcohols as defoamers poses disadvantages. The lower fatty alcohols i.e. those having from 8 to 16 carbon atoms are generally liquids at ambient temperature. Since such alcohols are generally immiscible in water, dispersing them with the aqueous based drilling mud is difficult without high shear. Moreover, at higher temperatures, often encountered in well drilling, the lower fatty alcohols tend to evaporate. The higher fatty alcohols i.e. those having from 18 to 32 carbon atoms, are normally solids or solid-like materials at ambient temperature, and therefore are difficult to disperse effectively in the drilling fluid because of their insolubility in water and because they tend to be waxy or semi-solids. Accordingly, they must be subjected to high shear or high temperature in order to be adequately dispersed and effective as defoamers.

It is therefore an object of the present invention to provide an improved defoamer composition for use in aqueous based drilling fluids.

Another object of the present invention is to provide a particulate defoamer for use in aqueous based drilling fluids which is readily dispersable.

Still a further object of the present invention is to provide a method for forming a particulate defoamer for use in water based drilling fluids.

The above and other objects of the present invention will become apparent from the discription given herein and the appended claims.

In one aspect of the present invention, there is provided a defoamer composition for use in water based drilling muds or fluids which comprises a generally uniform particulate mixture of from 1 to 50 percent by weight of an aliphatic alcohol having from 8 to 32 carbon atoms and from 90 to 50 percent by weight of a solid carrier material which is generally non-swelling in aqueous mediums, can be formed into or exist as particles having an average size of less than 150 microns, and which has the capacity to at least partially adsorb the alcohol.

· In another aspect of the present invention, the above defoamer composition is formed by intimately admixing the aliphatic alcohol and the carrier material to form an alcohol-carrier material mixture. The alcohol-carrier material mixture is then converted into a particulate form in a suitable manner.

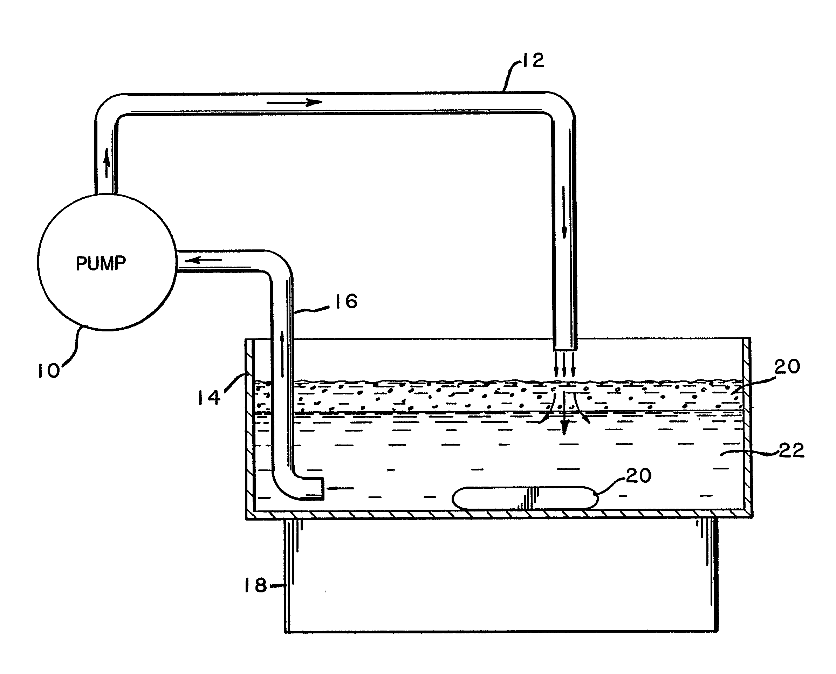

The single Figure is a schematic representation of an apparatus for testing the defoamer composition of the present invention.

The defoamer compositions of the present invention, while they have other uses, are particularly suited for use in aqueous based drilling fluids. Such drilling fluids, as is well known to those skilled in the art, can be fresh water based or salt water based. Moreover, they can be so called "invert emulsion" fluids which, in addition to containing an aqueous phase also contain an oil phase such as diesel oil or the like. The muds can contain weighting agents, fluid loss control additives, viscosifiers and other additives commonly used in drilling fluids to tailor the chemical, physical or rheological properties of the fluids. The composition of the aqueous based drilling fluids can vary widely, depending upon the drilling environment and the specific properties desired. The aqueous based drilling fluids with which the compositions of the present invention are used are to be distinguished from so called "oil based" muds which generally employ liquid hydrocarbons instead of an aqueous phase.

The two primary components of the defoamer composition of the present invention are an aliphatic alcohol and a solid carrier material. The aliphatic alcohols which are useful in the compositions of the present invention are those aliphatic alcohols, straight and branched chain, having from 8 to 32 carbon atoms, particularly alcohols having from 18 to 32 carbon atoms. Particularly preferred are aliphatic primary straight chain alcohols (fatty alcohols) having from 8 to 32 carbon atoms. The alcohols can be derived from a variety of sources such as from natural fats and wax containing substances e.g. sperm oil and spermaceti. The alcohols can also be produced synthetically such as for example by the Oxo process. The alcohols useful in the composition of the present invention may also be obtained by methods of production such as (A) reduction of vegetable seed oils and their fatty acids with sodium, (B) catalytic hydrogenation of such

2

oils at elevated temperatures and pressures and (C) hydrolysis of spermaceti and sperm oil by saponification and vacuum fraction distillation. Non-limiting example of alcohols useful in the compositions of the present invention include octyl, decyl, lauryl, myristyl, cetyl, stearyl, oleyl, linoleyl, linolenyl, etc. The alcohol will be present in the compositions in the present invention in an amount of from 1 to 50 percent by weight, with amounts from 7 to 20 percent by weight being preferred. It will be appreciated that the amount of alcohol employed will depend, to a certain extent, on the particular type of alcohol, the drilling environment, etc. The alcohol may be employed alone or in admixture with generally inert materials such as paraffins.

The second component of the compositions of the present invention is a solid carrier material. The solid carrier material for use in the composition of the present invention can comprise a wide variety of materials. The carrier material should be non-reactive with the components of the drilling fluid i.e. it should be inert to the extent that it has no deleterious effects on the chemical or physical properties of the drilling fluid. The carrier material should be of a type which either exists in or can be converted to a particulate form of desired size. Generally, it is desired that the carrier material have an average particle size of 175 microns or less so as to ensure good dispersability in the aqueous drilling fluid. The carrier material must also have the capacity to at least partially adsorb the alcohol component. The term "adsorb" or "adsorption" as used herein, refers to the ability of the carrier material to become coated with or attached to the alcohol in such a fashion that the surfactant or defoaming properties of the alcohol are not appreciably affected. The adsorption is preferably such that the alcohol is not immediately washed off or separated from the carrier material when dispersed in the drilling fluid. Thus, the carrier material should not be one in which the adsorption of or attachment to the alcohol substantially destroys the defoaming properties of the alcohol.

Many types of solid carrier materials having the above characteristics can be used in the compositions of the present invention. Such materials may be natural or synthetic and can include synthetic polymeric materials, sawdust, natural cellulosic materials such as, for example, ground rice hulls, ground nut shells, clays, etc. Other carrier materials may include solids which are commonly added to drilling and other well fluids as fluid loss additives, bridging agents, etc.

Preferred solid carrier materials are clays. The clays for use in the composition of the invention are the naturally occurring, fine grain earthy materials which are composed primarily of hydrated alumina silicates. However, it is contemplated that the term also includes clay minerals and small amounts of non-clay material as well as mixed clays. Suitable, non-limiting examples of clays which may be employed in the compositions include illite, kaolin, attapulgite, halloysite, mixtures of those clays as well as other clays and clay-like materials having the desired properties. Clays or clay-like materials are the preferred carrier materials because of their ready availability, relatively low cost and ease of grinding, comminuting or pulverizing into the desired particles or powder. Moreover, many such clays exist naturally as particulate solids having the desired size.

The carrier material will be present in the composition of the present invention in amounts of from 50 to 99 percent by weight, with amounts of from 80 to 93 percent by weight being preferred.

In forming the defoamer compositions of the present invention, the alcohol or mixture of alcohols is admixed with the carrier material so as to achieve a generally uniform blend or mixture of the carrier material and the alcohol. The blending or admixing of the alcohol and the carrier material can be conducted in a variety of ways. For example, the mixing can be carried out using pugmills, extruders, Banburys, kneaders, roll mills, etc.

To achieve the desired particle size of the alcohol-carrier material mixture, numerous methods may be employed. For example, comminution of the mixture may be achieved by the use of ball, pebble, rod, tube or compartment mills. Vibrating and ring roller mills may also be employed as well as disk attrition mills etc. It will be appreciated that in cases where the carrier material starting material is of the desired particle size, the use of grinding or other communuting techniques may be unnecessary other than to separate the alcohol-carrier mixture back into particle form.

In forming the alcohol-carrier material mixture, heat may be employed if the alcohol is a solid or solid-like material in order to melt the alcohol and affect its uniform distribution on the carrier material. Alternately, the solid or solid-like alcohol and carrier material can simply be blended in the manner described above with care being taken to ensure a generally uniform mixture between the alcohol and the carrier material. When higher temperatures are employed, they need only be sufficiently high to melt the alcohol and permit its uniform dispersion over the carrier material. As noted above, the preferred carrier material of the present invention is a clay or clay-like material. It has been found that with certain clay-like materials e.g. kaolin, mixing between the alcohol and the clay is facilitated if the clay is first pre-wetted with an aqueous medium such as fresh water. This pre-wetting enhances the adsorption of the alcohol onto the clay. In instances where pre-wetting of the carrier material e.g. the clay, is carried out, the mixture of the alcohol and the carrier material which has been wetted is generally dried prior to converting the mixture into

3

particulate form. Drying to remove the water or aqueous medium can be carried out in any conventional manner wherein moisture laden solids are dried, care being taken to not raise the temperature sufficiently to evaporate the alcohol or affect any deleterious reaction between the carrier material and the alcohol or degradation of either.

To more fully illustrate the present invention, the following non-limiting examples are presented.


Example 1


The aqueous test mud used in this and the succeeding examples had the following composition:

350 ml fresh water

20.0 g. AQUAGEL (trademark of a bentonite marketed by NL Industries, Inc.)

5.0 g. Q BROXIN (trademark of a ferrochrome lignosulfonate filtrate control agent marketed by Georgia Pacific Corporation)

0.5 g. caustic soda

8.0 g. synthetic sea salt

30.0 g. Glen Rose shale

To simulate, as well as possible, actual conditions in a mud pit and test the effectiveness of the defoamer compositions of the present invention, the apparatus, shown schematically in the figure, was set up. A small circulating pump 10 was connected to a 6mm (0.25 inch) OD stainless steel tubing discharge line 12 which discharged into a 2500cc crystallization dish 14. The end of the line 12 was disposed above the fluid level in the dish 14 in such a manner as to allow the pump to discharge into the dish 14 at a rate and height that would create or continue a foam layer 20 above the level of the test mud 22. Pump intake line 16, also a 6mm (0.25 inch) OD stainless steel tubing, was positioned so as to draw in fluid near the bottom of the dish 14. The dish was placed on a heater/magnetic stirrer 18 so as to heat the mud in the dish 14 while simultaneously effecting agitation thereof via stir bar 20.

A series of defoamer compositions were prepared using kaolin clay as a carrier material and EPAL-20 + as an alcohol. EPAL-20 + is the trademark of a blend of about 66 percent by weight linear and branched alcohols with carbon numbers ranging from $C_{20}$ to $C_{32}$ and of hydrocarbons (paraffins) with carbon numbers ranging from $C_{24}$ to $C_{40}$ and marketed by Ethyl Corporation. In formulating the defoamers, the kaolin was ground with a mortar and pestle and passed through a 100 mesh 149 $\mu$m screen before use. The clay was weighed into a pyrex beaker. 15% by weight of water was added and spatulated through to pre-wet the kaolin clay. The EPAL-20 + was kept in a closed container and melted in an oven at 150° F (66° C). Various amounts of the EPAL-20 + alcohol were added to the pre-moistened clay. The beaker was then placed in a laboratory microwave oven and heated for 30 seconds to remelt the EPAL-20 +. It was noted that the EPAL-20 + soaked into the clay and was adsorbed. The mixture was then stirred with a spatula to distribute the defoamer and passed through a laboratory food grinder three times to ensure even distribution of the components. The resulting product was dried overnight at 150° F (66° C) in an oven. After cooling, the materials were ground and screened through a 100 mesh (149$\mu$m) screen before being tested. Sample 1 was ground in a laboratory micromill. Sample 2, which was more waxy and tacky, packed the inside of the mill and had to be ground with a mortar and pestle. Sample 3 was also ground with a mortar and pestle. All three samples were passed through a 100 mesh (149 $\mu$m) screen before testing. Although the samples were somewhat waxy in consistency, they were all sufficiently friable that a major portion of each easily broke apart and passed through the screen to form solid, particulate defoamers. The compositions of the defoamer compositions are given below in Table 1.

Table 1

| Sample No. | Grams EPAL-20 + | Grams Kaolin | % EPAL-20 + |
|---|---|---|---|
| 1 | 5.0 | 47.7 | 9.5 |
| 2 | 7.5 | 45.1 | 14.3 |
| 3 | 10.0 | 42.5 | 19.0 |

A three barrel (0.477m³) equivalent of the test mud described above was used for each test in the test system described above. Flow rate was maintained at a rate equivalent to 3-4 barrels per minute (0.477 to

4

0.636m³/minute).

Test Results on Sample 3

The test mud was mixed, circulated, stirred with a magnetic stirred and heated to a temperature of 150˚F (66˚C). The powdered defoamer in an amount of 0.125 lb/bbl (0.36 kg/m³), of mud was sprinkled onto the foam surface around the area of the pump discharge. The foam began to break out immediately. The defoamer powder was drawn into the mud with the circulation. Large bubbles began to form in the treated area, which grew larger and would then break out. It was noted that the area under the bubbles was essentially foam free. The treated area would expand and more foam would break out, the defoamer affecting a larger and larger area. Within five minutes, the foam which had previously covered the entire surface of the fluid to a depth of about 15 mm was essentially gone. Some foam was formed at the point of the pump discharge, but it broke out immediately as it dispersed through the mud.

In a second, low temperature test of Sample 3, the above procedure was repeated with the exception that the temperature of the circulating mud was 87˚C (31˚C). Small aliquots of the defoamer composition was sprinkled onto the foam. After 0.09 g. of sample (0.03 lb/bbl) (0.086 kg/m³) was added, the foam started to break out as in the first test on Sample 3. Again, after only a short time, the foam was reduced to an insignificant amount.

Test Results on Sample 1

The above low temperature test on Sample 3 was repeated using Sample 1 with the same result as set out above with respect to Sample 3. However, in this case 0.12 g. or 0.04 lb/bbl (0.114 kg/m³) of the defoamer composition was added in order to achieve the same effect.

Test Results on Sample 2

Sample 2 was tested in the same manner as Samples 1 and 3 (low temperatures), the test being conducted at 87˚F. (31˚C). At a concentration of 0.04 pounds per barrel (0.114kg/m³) the defoamer of Sample 2 performed equally as well as the defoamers of Examples 1 or 3.

## Example 2

For comparison purposes, the procedure of Example 1 was repeated with the exception that only kaolin clay, in an amount equivalent to that used in Samples 1, 2 and 3 of Example 1, was added; to determine if the clay, by itself, had any effect on defoaming. The clay was sprinkled liberally over the foam test mud but had no visible effect on defoaming in the system.

## Example 3

A series of substantially dry, partiiculate defoamers was prepared, using various alcohols and kaolin clay. The clay was crushed in a mortar and pestle and screened through a 100 mesh (149μm) sieve. To make up the batches of the defoamer composition, 45 g. of clay (dry basis) was mixed with 5 g. of the alcohol. Before adding the alcohol, each batch of clay was pre-wet with 10 ml of water. The alcohol was then added with spatulation and the mixture passed through a meat grinder three times. In cases where the alcohols were liquids, the addition was done volumetrically. The waxy sample were weighed into a 50 ml beaker, melted at 150˚F (66˚C) in an oven, and then mixed into the clay. All samples were dried overnight at 150˚F (66˚C). Following drying, the samples were ground in an osterizer, then screened through a 200 mesh (74μm) sieve before testing. In each test, 0.12 g. of sample was sprinkle into the mud at the pump discharge area. This is equivalent to the addition of 0.04 lb/bbl (0.114 kg/m³) of defoamer composition. The test mud used was that described in Example 1 and was circulated at a rate of 3 to 4 barrels per minute (0.477 to 0.636 m$^3$/minute. The alcohols employed, in addition to EPAL-20 + and EPAL-1618, which is essentially the same as EPAL-20 + but with alcohols of carbon chain length $C_{16}$-$C_{18}$, were a series of linear, primary alcohols sold under the trademark NEODOL by Shell Chemical Company. The carbon chain length and melting points of the alcohols are shown in Table 2 below.

Table 2

| Sample No. | Alcohol | Alcohol Chain Length | Melting Point, °F/°C |
|---|---|---|---|
| 1 | NEODOL 91 | $C_9$-$C_{11}$ | 16 / - 9 |
| 2 | NEODOL 23 | $C_{12}$-$C_{13}$ | 64-72/18-22 |
| 3 | NEODOL 45 | $C_{14}$-$C_{15}$ | 84-90/29-32 |
| 4 | EPAL-1618 | $C_{16}$-$C_{18}$ | 115/46 |
| 5 | EPAL-20 + | $C_{20+}$ | 115/46 |

Test Results on Sample No. 1

This test was conducted with the mud at a temperature of 78°F (26°C). 0.12 g. of the defoamer was sprinkled on the mud surface. The foam disappeared immediately and was completely gone within one minute.

Test Results on Sample No. 2

This test was also conducted at a temperature of 78°F (26°C). 0.12 g. of the defoamer composition was sprinkled on the mud surface. The foam disappeared immediately and was completely gone within one minute.

Test Results on Sample No. 3

This test was conducted at a temperature of 80°F (27°C). 0.12 g. of the defoamer composition was sprinkled on the mud surface and dispersed into the mud but did not immediately affect the foaming. After approximately two minutes, the foam started breaking out and the foam was completely gone in four minutes.

Test Results on Sample No. 4

In this test, which was conducted at 78°F (26°C). 0.12 g. of the defoamer composition was sprinkled on the mud surface at the pump discharge. Although the defoamer composition dispersed in the mud immediately, it was not immediately effective at defoaming. After about 5 minutes of circulation, the foam began to show signs of breaking up and after ten minutes the foam was essentially gone.

Test Results on Sample No. 5

In this test, which was conducted at 78°F (26°C), 0.12 g. of the defoamer composition was sprinkled on the mud surface at the pump discharge. Although the composition was immediately dispersed in the mud, it was not immediately effective at defoaming. After about three minutes the foam began to break and after eight minutes the foam was essentially gone.

Example 4

6

The procedure of Example 3 was followed, with the exception that the defoamer composition comprised 46.11 g. of kaolin and 6.08 ml of octyl alcohol. This particulate defoamer was tested on the test mud in the test apparatus at a temperature of 78° F (26° C). The foam dissipated immediately upon addition of the sample around the area where it was sprinkled. Foam broke out slowly over the remainder of the dish after about ten minutes.


## Example 5


This example demonstrates that paraffin and clay alone have no effect on defoaming. The procedure followed was the same as that followed in Example 3, with the exception that the composition contained 46.11 g. of kaolin and 5.0 g. of paraffin. It was found that this composition had no effect whatsoever on foaming in the test apparatus, and after one hour none of the foam had dissipated.

As can be seen from the above results, the compositions of the present invention are substantially dry, solid particulate defoamer compositions which can be easily dispersed in aqueous mud systems and are highly effective in preventing foaming. The compositions can be used at low temperatures i.e. about 75° F (24° C) and at high temperatures i.e. at about 150° F (66° C with virtually equal effectiveness. The defoamer compositions are easy to handle and transport and disperse quickly in the muds.


## Claims

1. A defoamer composition for water based drilling muds characterised by comprising a generally uniform, particulate mixture of from 1 to 50% by weight of an aliphatic alcohol having from 8 to 32 carbon atoms, and from 99 to 50% by weight of a solid carrier material which is generally non-swelling in aqueous media, which can be formed into particles having an average size of less than 150 micrometers, and which at least partially adsorbs said alcohol.

2. A defoamer composition according to Claim 1 characterised in that the said alcohol is present in an amount of from 7 to 20% by weight.

3. A defoamer composition according to Claim 1 or 2 characterised in that the said carrier material is a clay.

4. A defoamer composition according to Claim 3 characterised in that the said clay is illite, kaolin, halloysite, attapulgite or a mixture thereof.

5. A defoamer composition according to any one of Claims 1 to 4 characterised in that the alcohol contains from 18 to 32 carbon atoms.

6. A method of forming a defoamer composition according to any one of Claims 1 to 5 characterised by mixing the carrier and
converting the alcohol-carrier mixture into a particulate form.

7. A method according to Claim 6 wherein the carrier is a clay characterised by wetting the clay with an aqueous medium before mixing with the alcohol.

8. A method according to Claim 7 characterised by drying the alcohol-carrier material mixture before converting the mixture into a particulate form.